# EUROPEAN PATENT APPLICATION

(11) **EP 1 731 345 A1**
(43) Date of publication of application: **13.12.2006**
(21) Application number: 05719573.7
(22) Date of filing: 21.02.2005
(51) Int. Cl.: B60K 17/04, B60K 6/04, B60L 11/14

(54) **POWER OUTPUT DEVICE AND AUTOMOBILE**

(30) Priority: 31.03.2004 JP 2004107273
(71) Applicant: TOYOTA JIDOSHA KABUSHIKI KAISHA, Toyota-shi, Aichi-ken 471-8571 (JP)
(72) Inventor: YAMAUCHI, Tomokazu, c/o TOYOTA JIDOSHA K. K., Toyota-shi, Aichi 4718571 (JP)
(74) Representative: Kuhnen, Rainer-Andreas
(86) International application number: PCT/JP2005/003230
(87) International publication number: WO 2005/097536

(57) **Abstract**

In a power output apparatus of the invention, an engine EG1 is connected with a motor MG1 and is connected with an engine EG2 via a clutch C1. A driveshaft 65 is connected to the engine EG2 via a clutch C2 and is linked with a motor MG2. On a start or in a low speed range, the clutch C2 is set in an OFF position to disconnect the engine EG2 from the driveshaft 65, and the power output apparatus is driven only with the output power of the motor MG2. In an intermediate speed range, the clutch C2 is set in an ON position, and the power output apparatus is driven mainly with the output power of the engine EG2 that is driven with high efficiency. This arrangement enhances the total energy efficiency. The power output apparatus of the invention has a simple structure including the two clutches in addition to the two engines and the two motors.

## Description

### Technical Field

The present invention relates to a power output apparatus and a motor vehicle.

### Background Art

A proposed power output apparatus has two engines and two motors mounted on a vehicle (see, for example, Japanese Patent Laid-Open Gazette No. H11-311137). The proposed power output apparatus uses a differential gear attached to an input shaft of a transmission, which is linked to drive wheels via another differential gear. The two motors are respectively connected via sets of brakes and clutches to remaining two shafts of the differential gear. Output shafts of the two engines having different output characteristics are respectively connected with rotating shafts of the two motors via clutches. The working engine is changed over between the two engines having the different output characteristics according to the driving conditions of the vehicle.

### Disclosure of the Invention

This prior art power output apparatus requires the differential gear, the two brakes, and the four clutches for the two engines and the two motors. Such requirement undesirably complicates the structure of the power output apparatus and leads to the troublesome on-off operations of the four clutches. The prior art power output apparatus changes over the working engine between the two engines having the different output characteristics according to the driving conditions of the vehicle. In the operations as a series hybrid vehicle, the engine of the lower torque characteristic may be used for power generation. The selective use of this engine undesirably lowers the power generation efficiency.

The power output apparatus and the motor vehicle of the invention aim to have a simple structure including two internal combustion engines and two motors. The power output apparatus and the motor vehicle of the invention also aim to enhance the total energy efficiency in a simple structure including two internal combustion engines and two motors. The power output apparatus and the motor vehicle of the invention further aim to ensure efficient output of a required power.

In order to attain at least part of the above and the other related objects, the power output apparatus and the motor vehicle of the invention have the configurations discussed below.

The present invention is directed to a first power output apparatus that outputs power to a driveshaft and the first power output apparatus includes: a first internal combustion engine that outputs power; a first motor that uses the output power of the first internal combustion engine to generate electric power; a second internal combustion engine that outputs power to the driveshaft; a second motor that inputs and outputs power from and to the driveshaft; an accumulator unit that is capable of transmitting electric power to and from the first motor and the second motor; and a first connection disconnection structure that connects and disconnects an output shaft of the first internal combustion engine with and from an output shaft of the second internal combustion engine.

In the state of disconnection of the output shaft of the first internal combustion engine from the output shaft of the second internal combustion engine by the first connection disconnection structure, the first power output apparatus of the invention uses the output power of the first internal combustion engine and the first motor to generate electric power. The first power output apparatus uses the second internal combustion engine and the second motor to output the power to the driveshaft, while charging the accumulator unit with the generated electric power. In the state of connection of the output shaft of the first internal combustion engine with the output shaft of the second internal combustion engine by the first connection disconnection structure, the first power output apparatus of the invention ensures direct output of the power from the first internal combustion engine, the second internal combustion engine, the first motor, and the second motor to the driveshaft, while charging the accumulator unit with electric power generated by either of the first motor and the second motor. The first power output apparatus of the invention includes the first connection disconnection structure, in addition to the first internal combustion engine, the second internal combustion engine, the first motor, and the second motor. This arrangement desirably simplifies the configuration of the power output apparatus and its control procedure.

In one preferable embodiment of the invention, the first power output apparatus further includes a second connection disconnection structure that connects and disconnects the output shaft of the second internal combustion engine with and from the driveshaft. In the state of disconnection of the output shaft of the second internal combustion engine from the driveshaft by the second connection disconnection structure, only the power of the second motor is output to the driveshaft. Disconnection of the output shaft of the second internal combustion engine from the driveshaft effectively enhances the energy efficiency in output of only the power of the second motor to the driveshaft.

In one preferable example of the first power output apparatus of the invention, the first internal combustion engine is drivable with high efficiency at a preset drive point, and the first motor generates electric power with high efficiency by using the output power of the first internal combustion engine driven at the preset drive point. This arrangement desirably enhances the power generation efficiency in the state of disconnection of the output shaft of the first internal combustion engine from the output shaft of the second internal combustion engine by the first connection disconnection structure.

In another preferable example of the first power output apparatus of the invention, the second internal combustion engine is drivable with high efficiency in a preset rotation speed range, and the second motor outputs a torque close to a maximum possible torque, which is expected as a torque to be output to the driveshaft in a rotation stop state of the driveshaft. The preset rotation speed range may be from an idling rotation speed or a preset first rotation speed higher than the idling rotation speed to a maximum possible rotation speed expected to the driveshaft. Such setting ensures the efficient power output to the driveshaft.

In another preferable embodiment of the invention, the first power output apparatus further includes: a charge state detection unit that detects a state of charge of the accumulator unit; a power demand setting module that sets a power demand to be output to the driveshaft, in response to an operator's operation; and a control module that controls the first internal combustion engine, the first motor, the second internal combustion engine, the second motor, and the first connection disconnection structure to keep the state of charge of the accumulator unit detected by the charge state detection unit in a predetermined charge range and to ensure output of a power, which is equivalent to the power demand set by the power demand setting module, to the driveshaft. This arrangement ensures output of the power equivalent to the power demand required by the operator to the driveshaft, while keeping the state of charge of the accumulator unit in the predetermined charge range.

In one preferable embodiment of the first power output apparatus of the invention having the second connection disconnection structure and ensuring output of the power equivalent to the power demand required by the operator to the driveshaft, the control module controls the second connection disconnection structure, when a rotation speed of the driveshaft is lower than a preset reference speed, to disconnect the output shaft of the second internal combustion engine from the driveshaft, while controlling the second connection disconnection structure, when the rotation speed of the driveshaft is not lower than the preset reference speed, to connect the output shaft of the second internal combustion engine with the driveshaft. This arrangement enables the efficient output of the power equivalent to the power demand required by the operator to the driveshaft. In the first power output apparatus of this preferable embodiment, the control module controls the first connection disconnection structure, when the rotation speed of the driveshaft is not lower than the preset reference speed and a torque demand at the set power demand is less than a preset reference torque, to disconnect the output shaft of the first internal combustion engine from the output shaft of the second internal combustion engine, while controlling the first connection disconnection structure, when the rotation speed of the driveshaft is not lower than the preset reference speed and the torque demand at the set power demand is not less than the preset reference torque, to connect the output shaft of the first internal combustion engine with the output shaft of the second internal combustion engine. This arrangement enables the efficient output of the power equivalent to the power demand required by the operator to the driveshaft.

The present invention is directed to a second power output apparatus that outputs power to a driveshaft and the second power output apparatus includes: a first internal combustion engine that is driven with high efficiency at a preset drive point and outputs power; a first motor that uses the output power of the first internal combustion engine driven at the preset drive point to generate electric power with high efficiency; a second internal combustion engine that outputs power to the driveshaft; a second motor that inputs and outputs power from and to the driveshaft; and an accumulator unit that is capable of transmitting electric power to and from the first motor and the second motor.

In the second power output apparatus of the invention, the first internal combustion engine is driven at the preset drive point, and the first motor uses the output power of the first internal combustion engine to generate electric power. The second power output apparatus thus desirably enhances its energy efficiency, while ensuring output of the power from the second internal combustion engine and the second motor to the driveshaft. The second power output apparatus of the invention includes the first internal combustion engine, the second internal combustion engine, the first motor, and the second motor. This arrangement desirably simplifies the configuration of the power output apparatus and its control procedure.

In one preferable embodiment of the second power output apparatus of the invention, the second internal combustion engine is drivable with high efficiency in a preset rotation speed range, and the second motor outputs a torque close to a maximum possible torque, which is expected as a torque to be output to the driveshaft in a rotation stop state of the driveshaft. Such setting ensures the efficient power output to the driveshaft.

In one preferable example of the invention, the second power output apparatus further includes: a charge state detection unit that detects a state of charge of the accumulator unit; a power demand setting module that sets a power demand to be output to the driveshaft, in response to an operator's operation; and a control module that controls the first internal combustion engine, the first motor, the second internal combustion engine, and the second motor to keep the state of charge of the accumulator unit detected by the charge state detection unit in a predetermined charge range and to ensure output of a power, which is equivalent to the power demand set by the power demand setting module, to the driveshaft. This arrangement ensures output of the power equivalent to the power demand required by the operator to the driveshaft, while keeping the state of charge of the accumulator unit in the predetermined charge range.

The present invention is directed to a third power output apparatus that outputs power to a driveshaft and the third power output apparatus includes: a first internal combustion engine that outputs power; a first motor that uses the output power of the first internal combustion engine to generate electric power; a second internal combustion engine that outputs power to the driveshaft; a second motor that outputs to the driveshaft a torque close to a maximum possible torque, which is expected as a torque to be output to the driveshaft in a rotation stop state of the driveshaft; and an accumulator unit that is capable of transmitting electric power to and from the first motor and the second motor.

The third power output apparatus of the invention has the second motor that outputs to the driveshaft a torque close to the maximum possible torque, which is expected as the torque to be output to the driveshaft in the rotation stop state of the driveshaft. Even when the power demand required for the driveshaft is defined by a combination of a low rotation speed and a high torque, the third power output apparatus uses the second motor to ensure the efficient power output to the driveshaft. The third power output apparatus of the invention includes the first internal combustion engine, the second internal combustion engine, the first motor, and the second motor. This arrangement desirably simplifies the configuration of the power output apparatus and its control procedure.

In one preferable example of the third power output apparatus of the invention, the second internal combustion engine is drivable with high efficiency in a specific rotation speed range from an idling rotation speed or a preset first rotation speed higher than the idling rotation speed to a maximum possible rotation speed expected to the driveshaft. This arrangement ensures the efficient power output to the driveshaft in a wide rotation speed range.

In one preferable example of the invention, the third power output apparatus further includes: a charge state detection unit that detects a state of charge of the accumulator unit; a power demand setting module that sets a power demand to be output to the driveshaft, in response to an operator's operation; and a control module that controls the first internal combustion engine, the first motor, the second internal combustion engine, and the second motor to keep the state of charge of the accumulator unit detected by the charge state detection unit in a predetermined charge range and to ensure output of a power, which is equivalent to the power demand set by the power demand setting module, to the driveshaft. This arrangement ensures output of the power equivalent to the power demand required by the operator to the driveshaft, while keeping the state of charge of the accumulator unit in the predetermined charge range.

The present invention is directed to a first motor vehicle and the first motor vehicle includes: a first internal combustion engine that outputs power; a first motor that uses the output power of the first internal combustion engine to generate electric power; a second internal combustion engine that outputs power to a driveshaft linked with an axle of the motor vehicle; a second motor that inputs and outputs power from and to the driveshaft; an accumulator unit that is capable of transmitting electric power to and from the first motor and the second motor; a first connection disconnection structure that connects and disconnects an output shaft of the first internal combustion engine with and from an output shaft of the second internal combustion engine; and a second connection disconnection structure that connects and disconnects the output shaft of the second internal combustion engine with and from the driveshaft.

In the state of disconnection of the output shaft of the first internal combustion engine from the output shaft of the second internal combustion engine by the first connection disconnection structure, the first motor vehicle of the invention uses the output power of the first internal combustion engine and the first motor to generate electric power. The first motor vehicle uses the second internal combustion engine and the second motor to output the power to the driveshaft, while charging the accumulator unit with the generated electric power. In the state of connection of the output shaft of the first internal combustion engine with the output shaft of the second internal combustion engine by the first connection disconnection structure, the first motor vehicle of the invention ensures direct output of the power from the first internal combustion engine, the second internal combustion engine, the first motor, and the second motor to the driveshaft, while charging the accumulator unit with electric power generated by either of the first motor and the second motor. The first motor vehicle of the invention includes the first connection disconnection structure, in addition to the first internal combustion engine, the second internal combustion engine, the first motor, and the second motor. This arrangement desirably simplifies the configuration of the motor vehicle and its control procedure. In the state of disconnection of the output shaft of the second internal combustion engine from the driveshaft by the second connection disconnection structure, only the power of the second motor is output to the driveshaft. Disconnection of the output shaft of the second internal combustion engine from the driveshaft effectively enhances the energy efficiency in output of only the power of the second motor to the driveshaft.

In one preferable embodiment of the invention, the first motor vehicle further includes: a charge state detection unit that detects a state of charge of the accumulator unit; a power demand setting module that sets a power demand to be output to the driveshaft, in response to an operator's operation; and a control module that controls the first internal combustion engine, the first motor, the second internal combustion engine, the second motor, and the first connection disconnection structure to keep the state of charge of the accumulator unit detected by the charge state detection unit in a predetermined charge range and to ensure output of a power, which is equivalent to the power demand set by the power demand setting module, to the driveshaft. This arrangement ensures output of the power equivalent to the power demand required by the operator to the driveshaft, while keeping the state of charge of the accumulator unit in the predetermined charge range. In this case, the control module may control the second connection disconnection structure, when a rotation speed of the driveshaft is lower than a preset reference speed, to disconnect the output shaft of the second internal combustion engine from the driveshaft, while controlling the second connection disconnection structure, when the rotation speed of the driveshaft is not lower than the preset reference speed, to connect the output shaft of the second internal combustion engine with the driveshaft. This arrangement enables the efficient output of the power equivalent to the power demand required by the operator to the driveshaft. In this case, the control module may also control the first connection disconnection structure, when the rotation speed of the driveshaft is not lower than the preset reference speed and a torque demand at the set power demand is less than a preset reference torque, to disconnect the output shaft of the first internal combustion engine from the output shaft of the second internal combustion engine, while controlling the first connection disconnection structure, when the rotation speed of the driveshaft is not lower than the preset reference speed and the torque demand at the set power demand is not less than the preset reference torque, to connect the output shaft of the first internal combustion engine with the output shaft of the second internal combustion engine. This arrangement enables the efficient output of the power equivalent to the power demand required by the operator to the driveshaft.

The present invention is directed to a second motor vehicle and the second motor vehicle includes: a first internal combustion engine that is driven with high efficiency at a preset drive point and outputs power; a first motor that uses the output power of the first internal combustion engine driven at the preset drive point to generate electric power with high efficiency; a second internal combustion engine that outputs power to a driveshaft linked with an axle of the motor vehicle; a second motor that inputs and outputs power from and to the driveshaft; an accumulator unit that is capable of transmitting electric power to and from the first motor and the second motor; a charge state detection unit that detects a state of charge of the accumulator unit; a power demand setting module that sets a power demand to be output to the driveshaft, in response to an operator's operation; and a control module that controls the first internal combustion engine, the first motor, the second internal combustion engine, and the second motor to keep the state of charge of the accumulator unit detected by the charge state detection unit in a predetermined charge range and to ensure output of a power, which is equivalent to the power demand set by the power demand setting module, to the driveshaft.

In the second motor vehicle of the invention, the first internal combustion engine is driven at the preset drive point, and the first motor uses the output power of the first internal combustion engine to generate electric power. The second motor vehicle thus desirably enhances its energy efficiency, while ensuring output of the power from the second internal combustion engine and the second motor to the driveshaft. The second motor vehicle of the invention includes the first internal combustion engine, the second internal combustion engine, the first motor, and the second motor. This arrangement desirably simplifies the configuration of the motor vehicle and its control procedure. This arrangement also ensures output of the power equivalent to the power demand required by the operator to the driveshaft, while keeping the state of charge of the accumulator unit in the predetermined charge range.

The present invention is directed to a third motor vehicle and the third motor vehicle includes: a first internal combustion engine that outputs power; a first motor that uses the output power of the first internal combustion engine to generate electric power; a second internal combustion engine that outputs power to a driveshaft linked with an axle of the motor vehicle; a second motor that outputs to the driveshaft a torque close to a maximum possible torque, which is expected as a torque to be output to the driveshaft in a rotation stop state of the driveshaft; an accumulator unit that is capable of transmitting electric power to and from the first motor and the second motor; a charge state detection unit that detects a state of charge of the accumulator unit; a power demand setting module that sets a power demand to be output to the driveshaft, in response to an operator's operation; and a control module that controls the first internal combustion engine, the first motor, the second internal combustion engine, and the second motor to keep the state of charge of the accumulator unit detected by the charge state detection unit in a predetermined charge range and to ensure output of a power, which is equivalent to the power demand set by the power demand setting module, to the driveshaft.

The third motor vehicle of the invention has the second motor that outputs to the driveshaft a torque close to the maximum possible torque, which is expected as the torque to be output to the driveshaft in the rotation stop state of the driveshaft. Even when the power demand required for the driveshaft is defined by a combination of a low rotation speed and a high torque, the third motor vehicle uses the second motor to ensure the efficient power output to the driveshaft. The third motor vehicle of the invention includes the first internal combustion engine, the second internal combustion engine, the first motor, and the second motor. This arrangement desirably simplifies the configuration of the motor vehicle and its control procedure. This arrangement also ensures output of the power equivalent to the power demand required by the operator to the driveshaft, while keeping the state of charge of the accumulator unit in the predetermined charge range.

### Brief Description of the Drawings

Fig. 1 schematically illustrates the configuration of a hybrid vehicle 20 equipped with a power output apparatus in one embodiment of the invention;
Fig. 2 is a flowchart showing a drive control routine executed by a hybrid electronic control unit 70;
Fig. 3 shows one example of a torque demand setting map; and
Fig. 4 schematically illustrates the configuration of another hybrid vehicle 120 in one modified embodiment.

### Best Modes of Carrying Out the Invention

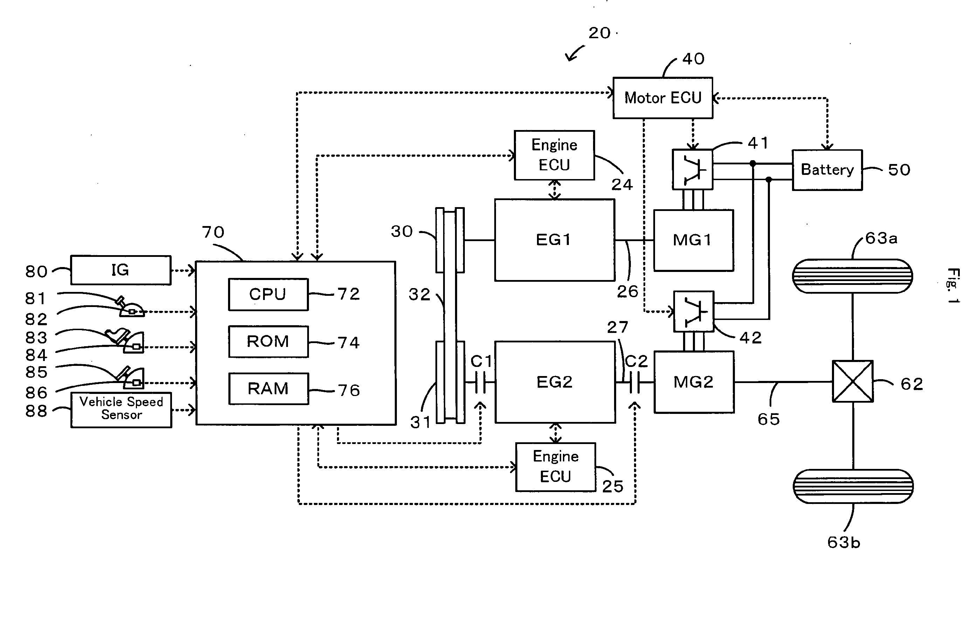

One mode of carrying out the invention is described below as a preferred embodiment. Fig. 1 schematically illustrates the configuration of a hybrid vehicle 20 equipped with a power output apparatus in one embodiment of the invention. As illustrated, the hybrid vehicle 20 of the embodiment has two engines EG1 and EG2 consuming gasoline to output power, two motors MG1 and MG2 constructed as known synchronous motor generators, and a hybrid electronic control unit 70 controlling the operations of the whole power output apparatus. The engine EG1 has a crankshaft 26 connecting with the motor MG1, which uses the output power of the engine EG1 to generate electric power. The crankshaft 26 of the engine EG1 is linked with a crankshaft 27 of the engine EG2 by means of identical-diameter pulleys 30 and 31, a belt 32, and a clutch C1. The engines EG1 and EG2 are driven at an identical rotation speed in an ON position of the clutch C1. The crankshaft 27 of the engine EG2 is connected via a clutch C2 to a driveshaft 65, which is linked to drive wheels 63a and 63b interconnected by means of a differential gear 62. The motor MG2 is also connected to the driveshaft 65 to input and output power from and to the driveshaft 65. The engine EG2 outputs power to the driveshaft 65 in an ON position of the clutch C2, and the engine EG1 outputs power to the driveshaft 65 in the ON position of both the clutches C2 and C1.

The engine EG1 is an internal combustion engine that has especially high operation efficiency at a specific drive point (defined by a specified combination of rotation speed and torque) . The engine EG2 is an internal combustion engine that is operable with high efficiency in a wide rotation speed range from an idling rotation speed to a maximum rotation speed of the driveshaft 65. The engines EG1 and EG2 are respectively under control of engine electronic control units (hereafter referred to as engine ECUs) 24 and 25. The engine ECUs 24 and 25 receive signals from various sensors measuring and detecting the operating conditions of the engines EG1 and EG2 and perform required series of operation control including fuel injection control, ignition control, and intake air flow regulation. The engine ECUs 24 and 25 communicate with the hybrid electronic control unit 70 to control the operations of the engines EG1 and EG2 in response to control signals sent from the hybrid electronic control unit 70 and to output data regarding the operating conditions of the engines EG1 and EG2 to the hybrid electronic control unit 70 according to the requirements.

The motor MG1 is a synchronous motor generator that has especially high efficiency of power generation when the engine EG1 is driven at the specific drive point of attaining the especially high operation efficiency. The motor MG2 is a synchronous motor generator that is capable of outputting a maximum possible torque to the driveshaft 65 on a start of the hybrid vehicle 20 in a rotation stop state of the driveshaft 65. The motors MG1 and MG2 are connected to a battery 50 via inverters 41 and 42 to be driven with a supply of electric power from the battery 50 and to supply the generated electric power to the battery 50. The motors MG1 and MG2 are driven and controlled by a motor electronic control unit (hereafter referred to as motor ECU) 40. The motor ECU 40 also manages and controls the battery 50 and calculates a remaining charge level or state of charge (SOC) of the battery 50 from an amount of charge-discharge current measured by an electric current sensor (not shown) attached to an output terminal of the battery 50. The motor ECU 40 communicates with the hybrid electronic control unit 70 to control the operations of the motors MG1 and MG2 in response to control signals sent from the hybrid electronic control unit 70 and to output data regarding the operating conditions of the motors MG1 and MG2 and the state of the battery 50 to the hybrid electronic control unit 70 according to the requirements.

The hybrid electronic control unit 70 is constructed as a microprocessor including a CPU 72, a ROM 74 that stores processing programs, a RAM 76 that temporarily stores data, input and output ports (not shown), and a communication port (not shown). The hybrid electronic control unit 70 receives, via its input port, an ignition signal from an ignition switch 80, a gearshift position SP or a current setting position of a gearshift lever 81 from a gearshift position sensor 82, an accelerator opening Acc or the driver's depression amount of an accelerator pedal 83 from an accelerator pedal position sensor 84, a brake pedal position BP or the driver's depression amount of a brake pedal 85 from a brake pedal position sensor 86, and a vehicle speed V from a vehicle speed sensor 88. The hybrid electronic control unit 70 outputs driving signals to the clutches C1 and C2 via its output port. The hybrid electronic control unit 70 establishes communication with the engine ECUs 24 and 25 and the motor ECU 40 via its communication port to receive and send diversity of control signals and data from and to the engine ECUs 24 and 25 and the motor ECU 40 as mentioned above.

The hybrid vehicle 20 of the embodiment having the configuration described above is drivable in a first drive pattern and in a second drive pattern. In the first drive pattern, the hybrid vehicle 20 runs with the output power of the motor MG2 in the OFF position of the clutch C2. In the second drive pattern, the hybrid vehicle 20 runs with the output power of the engine EG2 in the ON position of the clutch C2.

In the first drive pattern, the clutch C1 is generally set in the OFF position. The hybrid vehicle 20 accordingly runs with only the output power of the motor MG2, while the engine EG2 is at a stop. The first drive pattern is adopted on a start of the hybrid vehicle 20 or in a low vehicle speed range. In the first drive pattern, the engine EG1 starts in response to a decrease in state of charge SOC of the battery 50, which supplies electric power to the motor MG2, below a lower control limit. The motor MG1 uses the output power of the engine EG1 to generate electric power and supplies the generated electric power to the battery 50. In this state, the engine EG1 and the motor MG1 are driven at drive points of the highest power generation efficiency. The engine EG1 stops its operation in response to an increase in state of charge SOC of the battery 50 over an upper control limit. The state of charge SOC of the battery 50 is thus regulated in the range between the lower control limit and the upper control limit with supplying electric power to the motor MG2. In the first drive pattern, the clutch C1 may be set in the ON position to connect the engine EG2 to the crankshaft 26 of the engine EG1. In this case, the motor MG1 uses the total output power of the engines EG1 and EG2 to generate electric power.

In the second drive pattern, the hybrid vehicle 20 is not drivable below a specific vehicle speed corresponding to a lower rotation speed limit of the engine EG2, since the engine EG2 is directly connected to the driveshaft 65. In this embodiment, the second drive pattern is adopted in an intermediate vehicle speed range (for example, a speed range of not lower than 20 km/h or 30 km/h) that allows operation of the engine EG2 at a relatively high efficiency. In the second drive pattern, when a relatively low torque is set as the torque to be output to the driveshaft 65 based on the driver's depression amount of the accelerator pedal 83 and the vehicle speed V, the clutch C1 is set in the OFF position and the hybrid vehicle 20 runs mainly with the output power of the engine EG2. The motor MG2 is driven in an allowable range of the battery 50 when the output power of the engine EG2 is excessively greater or insufficiently smaller than the power to be output to the driveshaft 65. In this state, the engine EG1 and the motor MG1 are operated in the same manner as the first drive pattern. When a relatively high torque is set as the torque to be output to the driveshaft 65, on the other hand, the clutch C1 is set in the ON position to connect the engine EG1 and the motor MG1 to the driveshaft 65. In this case, the hybrid vehicle 20 runs mainly with the total output power of the engines EG1 and EG2. The motors MG1 and MG2 are driven in the allowable range of the battery 50 when the total output power of the engines EG1 and EG2 is excessively greater or insufficiently smaller than the power to be output to the driveshaft 65.

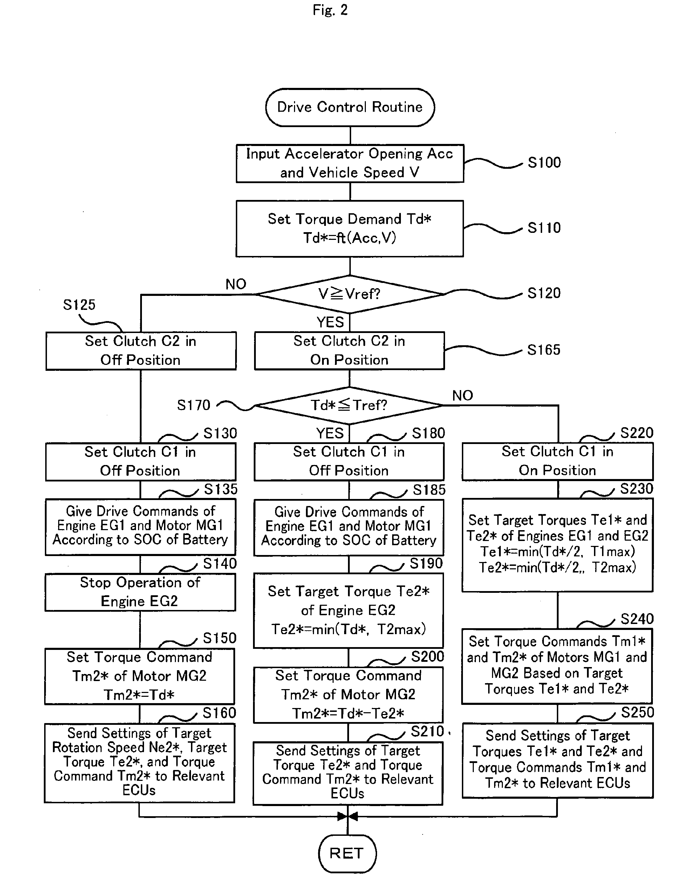

The description regards the operations of the hybrid vehicle 20 of the embodiment having the configuration discussed above. Fig. 2 is a flowchart showing a drive control routine executed by the hybrid electronic control unit 70 in the hybrid vehicle 20 of the embodiment. This drive control routine is performed repeatedly at preset time intervals, for example, at every 8 msec.

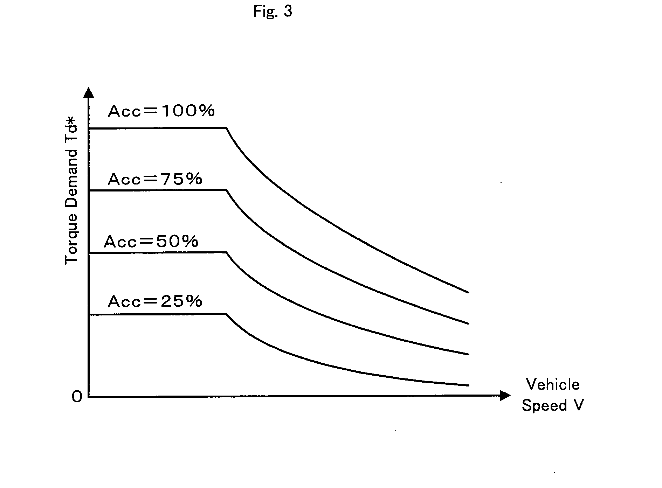

In the drive control routine, the CPU 72 of the hybrid electronic control unit 70 first inputs various data required for control, that is, the accelerator opening Acc from the accelerator pedal position sensor 84 and the vehicle speed V from the vehicle speed sensor 88 (step S100). The CPU 72 then sets a torque demand Td* to be output to the driveshaft 65 as a required torque of the hybrid vehicle 20, based on the input accelerator opening Acc and the input vehicle speed V (step S110). A concrete procedure of setting the torque demand Td* in this embodiment stores in advance variations in torque demand Td* against the accelerator opening Acc and the vehicle speed V as a torque demand setting map in the ROM 74 and reads the torque demand Td* corresponding to the given accelerator opening Acc and the given vehicle speed V from this torque demand setting map. One example of the torque demand setting map is shown in Fig. 3.

The CPU 72 subsequently compares the input vehicle speed V with a preset reference speed Vref (step S120). The reference speed Vref is set as a criterion for determining whether the clutch C2 is to be set in the ON position to drive the hybrid vehicle 20 mainly with the output power of the engine EG2. The reference speed Vref is, for example, 20 km/h or 30 km/h. When the input vehicle speed V is lower than the preset reference speed Vref, the first drive pattern is adopted to drive the hybrid vehicle 20 with only the output power of the motor MG2. The CPU 72 accordingly sets the clutch C2 in the OFF position (step S125) and the clutch C1 in the OFF position (step S130). The CPU 72 then gives drive commands to the engine ECU 24 and the motor ECU 40 to drive the engine EG1 and the motor MG1 according to the state of charge SOC of the battery 50 (step S135) . When the state of charge SOC of the battery 50 is below the lower control limit, in response to the received drive commands, the engine ECU 24 and the motor ECU 40 respectively perform fuel injection and ignition control of the engine EG1 and switching control of switching elements included in the inverter 41 for the motor MG1 to drive the engine EG1 and the motor MG1 at respective drive points of the highest power generation efficiency. When the state of charge SOC of the battery 50 exceeds the upper control limit, in response to the received drive commands, the engine ECU 24 and the motor ECU 40 respectively stop the fuel injection and ignition control of the engine EG1 and perform the switching control of the switching elements included in the inverter 41 for the motor MG1 to stop the operations of the engine EG1 and the motor MG1.

The CPU 72 sets both a target rotation speed Ne2* and a target torque Te* of the engine EG2 to 0 to stop the operation of the engine EG2 (step S140), and subsequently sets the torque demand Td* to a torque command Tm2* of the motor MG2 (step S150) . After setting the target rotation speed Ne2* and the target torque Te2* of the engine EG2 and the torque command Tm2* of the motor MG2, the CPU 72 transmits the settings of the target rotation speed Ne2* and the target torque Te2* to the engine ECU 25 and the setting of the torque command Tm2* to the motor ECU 40 (step S160) and exits from this drive control routine. The engine ECU 25 receives the target rotation speed Ne2* and the target torque Te2* and stops the fuel injection control and the ignition control of the engine EG2 to stop the operation of the engine EG2. The motor ECU 40 receives the torque command Tm2* and performs switching control of switching elements included in the inverter 42 to drive the motor MG2 with the torque command Tm2*.

When the input vehicle speed V is not lower than the preset reference speed Vref, the CPU 72 selects the second drive pattern to set the clutch C2 in the ON position (step S165) and compares the torque demand Td* with a preset reference torque Tref (step S170). The reference torque Tref is used as a criterion for determining whether the clutch C1 is to be set in the ON position to connect the engine EG1 and the motor MG1 to the driveshaft 65. The reference torque Tref is set based on a maximum engine torque T2max possibly output from the engine EG2 and a maximum motor torque Tm2max possibly output from the motor MG2 at a rotation speed Nd of the driveshaft 65. In this embodiment, the reference torque Tref is set to be greater than the maximum engine torque T2max but to be smaller than the sum of the maximum engine torque T2max and the maximum motor torque Tm2max. When the torque demand Td* is less than the preset reference torque Tref, the hybrid vehicle 20 is to be driven mainly with the output power of the engine EG2. The CPU 72 accordingly sets the clutch C1 in the OFF position (step S180) and, as in the case of the first drive pattern, gives drive commands to the engine ECU 24 and the motor ECU 40 to drive the engine EG1 and the motor MG1 according to the state of .charge SOC of the battery 50 (step 5185). The CPU 72 compares the maximum engine torque T2max possibly output from the engine EG2 with the torque demand Td* and sets the smaller to the target torque Te2* of the engine EG2 (step S190). The CPU 72 then sets a difference between the torque demand Td* and the target torque Te2* to the torque command Tm2* of the motor MG2 (step S200). After setting the target torque Te2* of the engine EG2 and the torque command Tm2* of the motor MG2, the CPU 72 transmits the setting of the target torque Te2* to the engine ECU 25 and the setting of the torque command Tm2* to the motor ECU 40 (step S210) and exits from this drive control routine. The engine ECU 25 receives the target torque Te2* and performs the fuel injection control and the ignition control to enable output of the target torque Te2* from the engine EG2. The motor ECU 40 receives the torque command Tm2* and performs the switching control of the switching elements included in the inverter 42 to drive the motor MG2 with the torque command Tm2*.

When the torque demand Td* is not less than the preset reference torque Tref, on the other hand, both the engines EG1 and EG2 are required to output the power for driving the hybrid vehicle 20. The CPU 72 accordingly sets the clutch C1 in the ON position (step S220), and compares half the torque demand Td* (Td*/2) with a maximum engine torque T1max possibly output from the engine EG1 and with the maximum engine torque T2max possibly output from the engine EG2 and sets the respective smaller values to the target torques Te1* and Te2* of the engines EG1 and EG2 (step S230). The torque commands Tm1* and Tm2* of the motors MG1 and MG2 are then set, based on the sum of the target torque Te1* and the target torque Te2* of the engines EG1 and EG2 and the torque demand Td* (step S240). A torque Tm is given as a difference between the torque demand Td* and the sum of the target torques Te1* and Te2* . When the calculated torque Tm is smaller than the maximum motor torque Tm2max possibly output from the motor MG2, the CPU 72 sets the calculated torque Tm to the torque command Tm2* of the motor MG2 and 0 to the torque command Tm1* of the motor MG1. When the calculated torque Tm is not smaller than the maximum motor torque Tm2max, the CPU 72 sets the maximum motor torque Tm2max to the torque command Tm2* of the motor MG2 and a differential torque as a difference between the calculated torque Tm and the maximum motor torque Tm2max to the torque command Tm1* of the motor MG1.

After setting the target torques Te1* and Te2* of the engines EG1 and EG2 and the torque commands Tm1* and Tm2* of the motors MG1 and MG2, the CPU 72 transmits the settings of the target torques Te1* and Te2* to the engine ECUs 24 and 25 and the settings of the torque commands Tm1* and Tm2* to the motor ECU 40 (step S250) and exits from the drive control routine.

As described above, the hybrid vehicle 20 of the embodiment has the simple structure including the two clutches C1 and C2 in addition to the two engines EG1 and EG2 and the two motors MG1 and MG2. The hybrid vehicle 20 of the embodiment selects either the first drive pattern or the second drive pattern to have the higher operation efficiency according to the vehicle speed V. The first drive pattern sets the clutch C2 in the OFF position and causes the hybrid vehicle 20 to run with only the output power of the motor MG2. The second drive pattern sets the clutch C2 in the ON position and causes the hybrid vehicle 20 to run mainly with the output power of the engine EG2. This arrangement desirably enhances the total energy efficiency.

The hybrid vehicle 20 of the embodiment selects the first drive pattern on a start of the hybrid vehicle 20 or in a low vehicle speed range. The first drive pattern sets the clutch C1 in the OFF position and causes the hybrid vehicle 20 to run with only the output power of the motor MG2 at a stop of the engine EG2. This arrangement disconnects the engine EG2 from the driveshaft 65 and accordingly enhances the total energy efficiency. In this state, the engine EG1 is driven at a highly efficient drive point, which depends on the state of charge SOC of the battery 50. The motor MG1 uses the output power of the engine EG1 and generates electric power with high efficiency. This arrangement enhances the power generation efficiency, while regulating the state of charge SOC of the battery 50 in the range between the lower control limit and the upper control limit. The hybrid vehicle 20 of the embodiment selects the second drive pattern in an intermediate vehicle speed range where the engine EG2 is drivable with high efficiency. When a relatively low torque is set as the torque to be output to the driveshaft 65, the second drive pattern sets the clutch C1 in the OFF position and causes the hybrid vehicle 20 to run mainly with the output power of the engine EG2 that is driven with high efficiency. This arrangement ensures the efficient power output to the driveshaft 65 and enhances the total energy efficiency. When a relatively high torque is set as the torque to be output to the driveshaft 65, on the other hand, the second drive pattern sets the clutch C1 in the ON position to connect the engine EG1 and the motor MG1 to the driveshaft 65 and causes the hybrid vehicle 20 to run mainly with the output powers of the engine EG1 and EG2 that are driven with high efficiency. This arrangement ensures output of a high torque to the driveshaft 65 and enhances the total energy efficiency. The hybrid vehicle 20 of the embodiment enables a power equivalent to the driver's requirement to be output to the driveshaft 65 with high efficiency.

In the hybrid vehicle 20 of the embodiment, the engine EG2 is an internal combustion engine that is drivable with high efficiency in a wide rotation speed range from the idling rotation speed to the maximum rotation speed of the driveshaft 65. The engine EG2 may be an internal combustion engine that is drivable with high efficiency in a rotation speed range from a preset rotation speed (for example, 1000 rpm) higher than the idling rotation speed to the maximum rotation speed of the driveshaft 65. The engine EG2 may otherwise be an internal combustion engine that is drivable with high efficiency in a rotation speed range covering the vehicle speed generally required for automobiles.

In the hybrid vehicle 20 of the embodiment, the motor MG2 is a synchronous motor generator that is capable of outputting a maximum possible torque, which is expected to be output to the driveshaft 65 under the condition of rotation stop of the driveshaft 65, that is, on a start of the hybrid vehicle 20. The motor MG2 may be a synchronous motor generator that is capable of outputting a torque close to the maximum possible torque or outputting a torque slightly higher than the maximum possible torque.

In the hybrid vehicle 20 of the embodiment, the engine EG1 is an internal combustion engine that is drivable with especially high efficiency at a preset drive point (defined by the combination of the rotation speed and the torque). The engine EG1 may be an internal combustion engine that is drivable with high efficiency in a preset operation range. This application ensures the efficient operation of the engine EG1 in the ON position of the clutch C1 to directly output the power to the driveshaft 65, as well as in the OFF position of the clutch C1 to output the power for charging the battery 50.

The hybrid vehicle 20 of the embodiment has the clutch C2 to connect and disconnect the crankshaft 27 of the engine EG2 with and from the driveshaft 65. One possible modification may omit the clutch C2 and may cause the crankshaft 27 of the engine EG2 to constantly connect with the driveshaft 65. The hybrid vehicle of this modified structure includes the clutch C1 in addition to the engines EG1 and EG2 and the motors MG1 and MG2. This modified structure simplifies the configuration of the hybrid vehicle and its control procedure. In this modified structure, in the first drive pattern on a start of the hybrid vehicle or in a low vehicle speed range, the engine EG2 is rotated at the rotation speed Nd of the driveshaft 65.

The hybrid vehicle 20 of the embodiment has the clutches C1 and C2. One possible modification may omit these clutches C1 and C2 and may attain the technique of the invention with a simpler structure including the engines EG1 and EG2 and the motors MG1 and MG2. Such modification desirably simplifies the configuration of the hybrid vehicle and its control procedure.

When the drive control routine executed by the hybrid electronic control unit 70 of the embodiment selects the first drive pattern, the motor MG1 generates electric power by using the output power of the engine EG1 driven in the OFF position of the clutch C1 and in the stop state of the engine EG2. In a modified flow of the drive control, the motor MG1 may generate electric power by using the total output power of the engines EG1 and EG2 driven in the ON position of the clutch C1.

The hybrid vehicle 20 of the embodiment selects either the first drive pattern or the second drive pattern, based on the result of the comparison between the vehicle speed V and the preset reference speed Vref. One possible modification of the drive control may select either the first drive pattern or the second drive pattern to enhance the total energy efficiency of the whole hybrid vehicle. The modified drive control process may experimentally or otherwise specify a changeover point of the drive pattern having the higher energy efficiency between the first drive pattern and the second drive pattern and may change the drive pattern between the first drive pattern and the second drive pattern at the specified changeover point. Any other suitable techniques may be applied to change over the drive pattern between the first drive pattern and the second drive pattern.

The hybrid vehicle 20 of the embodiment determines whether the vehicle speed V is not lower than the preset reference speed Vref and changes over the drive pattern between the first drive pattern and the second drive pattern based on the result of the determination. One possible modification of the drive control may set a hysteresis in changeover of the drive pattern between the first drive pattern and the second drive pattern. This modified drive control desirably prevents frequent changeover of the drive pattern when the vehicle speed V is close to the preset reference speed Vref.

The two pulleys 30 and 31 have an identical diameter in the hybrid vehicle 20 of the embodiment, but may have different diameters. For example, the diameter of the pulley 30 may be greater than the diameter of the pulley 31. When a relatively large torque is set as the torque to be output to the driveshaft 65 during a high-speed drive of the hybrid vehicle, setting the clutch C2 in the ON position causes the rotation speed Ne2 of the engine EG2 to be equal to the rotation speed Nd of the driveshaft 65. When the two pulleys 30 and 31 have an identical diameter, in the ON position of the clutch C1, the rotation speed Ne1 of the engine EG1 becomes equal to the rotation speed Nd of the driveshaft 65. When the diameter of the pulley 30 is greater than the diameter of the pulley 31, however, in the ON position of the clutch C1, the rotation speed Ne1 of the engine EG1 is lower than the rotation speed Ne2 of the engine EG2. Adjustment of the ratio of the diameter of the pulley 30 to the diameter of the pulley 31 desirably regulates the ratio of the rotation speed Ne1 of the engine EG1 to the rotation speed Ne2 of the engine EG2. This enhances the total energy efficiency of the hybrid vehicle.

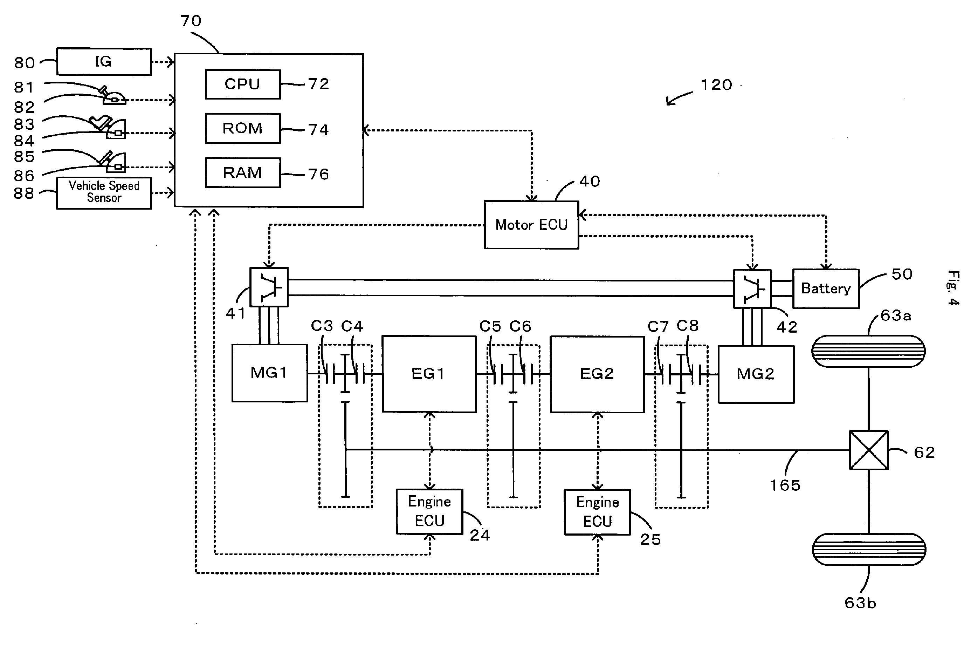

The embodiment regards one configuration of the hybrid vehicle 20 that is driven with the output power of the two engines and the two motors. Any of other diverse configurations may be adopted in the hybrid vehicle driven with the output power of the two engines and two motors. In a hybrid vehicle 120 of a modified example shown in Fig. 4, a motor MG1, an engine EG1, an engine EG2, and a motor MG2 are sequentially connected in series via clutches C3 to C8. The clutches C3 to C8 are placed in pairs between the motor MG1 and the engine EG1, between the engine EG1 and the engine EG2, and between the engine EG2 and the motor MG2. Gears are provided between the respective pairs of clutches C3 to C8 and engage with mating gears attached to a driveshaft 165. In the hybrid vehicle 120 of this modified structure, the on-off operations of the six clutches C3 to C8 enable the arbitrary power output from the two engines EG1 and EG2 and the two motors MG1 and MG2 to the driveshaft 165. For example, the two clutches C5 and C6 placed between the engines EG1 and EG2 are set in the OFF position, while the other clutches C3, C4, C7, and C8 are set in the ON position. In this state, the engine EG2 outputs a power equivalent to a running resistance, that is, a power required for stationary operation, and the engine EG1 outputs a power to compensate for a variation in power demand to be output to the driveshaft 165. When a relatively large torque is set as the torque to be output to the driveshaft 165, the drive control may set all the clutches C3 to C8 in the ON position to connect the engines EG1 and EG2 and the motors MG1 and MG2 to the driveshaft 165 and enable power output from all the engines EG1 and EG2 and the motors MG1 and MG2 to the driveshaft 165. In the hybrid vehicle 120 of the modified example, the two engines EG1 and EG2, the two motors MG1 and MG2, and the driveshaft 165 are interconnected by means of the gears. Transmissions may be used for the same purpose.

In the embodiment and its modified example described above, the power output apparatus including the engines EG1 and EG2 and the motors MG1 and MG2 to output the power to the driveshaft 65 or 165 is mounted on the motor vehicle. The power output apparatus of the invention may be mounted on diversity of other moving bodies, such as various vehicles, ships and boats, and aircraft or may be applied as the power source of diverse stationary equipment, such as construction machines.

The embodiment and its modified examples discussed above are to be considered in all aspects as illustrative and not restrictive. There may be many other modifications, changes, and alterations without departing from the scope or spirit of the main characteristics of the present invention.

### Industrial Applicability

The technique of the invention is preferably applied to the manufacturing industries of power output apparatuses and motor vehicles and other relevant industries.

## Claims

1. A power output apparatus that outputs power to a driveshaft, said power output apparatus comprising:
a first internal combustion engine that outputs power;
a first motor that uses the output power of the first internal combustion engine to generate electric power;
a second internal combustion engine that outputs power to the driveshaft;
a second motor that inputs and outputs power from and to the driveshaft;
an accumulator unit that is capable of transmitting electric power to and from the first motor and the second motor; and
a first connection disconnection structure that connects and disconnects an output shaft of the first internal combustion engine with and from an output shaft of the second internal combustion engine.

2. A power output apparatus in accordance with claim 1, said power output apparatus further comprising:
a second connection disconnection structure that connects and disconnects the output shaft of the second internal combustion engine with and from the driveshaft.

3. A power output apparatus in accordance with claim 1, wherein the first internal combustion engine is drivable with high efficiency at a preset drive point, and
the first motor generates electric power with high efficiency by using the output power of the first internal combustion engine driven at the preset drive point.

4. A power output apparatus in accordance with claim 1, wherein the second internal combustion engine is drivable with high efficiency in a preset rotation speed range, and
the second motor outputs a torque close to a maximum possible torque, which is expected as a torque to be output to the driveshaft in a rotation stop state of the driveshaft.

5. A power output apparatus in accordance with claim 4, wherein the preset rotation speed range is from an idling rotation speed or a preset first rotation speed higher than the idling rotation speed to a maximum possible rotation speed expected to the driveshaft.

6. A power output apparatus in accordance with claim 1, said power output apparatus further comprising:
a charge state detection unit that detects a state of charge of the accumulator unit;
a power demand setting module that sets a power demand to be output to the driveshaft, in response to an operator's operation; and
a control module that controls the first internal combustion engine, the first motor, the second internal combustion engine, the second motor, and the first connection disconnection structure to keep the state of charge of the accumulator unit detected by the charge state detection unit in a predetermined charge range and to ensure output of a power, which is equivalent to the power demand set by said power demand setting module, to the driveshaft.

7. A power output apparatus in accordance with claim 1, said power output apparatus further comprising:
a second connection disconnection structure that connects and disconnects the output shaft of the second internal combustion engine with and from the driveshaft;
a charge state detection unit that detects a state of charge of the accumulator unit;
a power demand setting module that sets a power demand to be output to the driveshaft, in response to an operator's operation; and
a control module that controls the first internal combustion engine, the first motor, the second internal combustion engine, the second motor, and the first connection disconnection structure to keep the state of charge of the accumulator unit detected by the charge state detection unit in a predetermined charge range and to ensure output of a power, which is equivalent to the power demand set by said power demand setting module, to the driveshaft.

8. A power output apparatus in accordance with claim 7, wherein said control module controls the second connection disconnection structure, when a rotation speed of the driveshaft is lower than a preset reference speed, to disconnect the output shaft of the second internal combustion engine from the driveshaft, while controlling the second connection disconnection structure, when the rotation speed of the driveshaft is not lower than the preset reference speed, to connect the output shaft of the second internal combustion engine with the driveshaft.

9. A power output apparatus in accordance with claim 8, wherein said control module controls the first connection disconnection structure, when the rotation speed of the driveshaft is not lower than the preset reference speed and a torque demand at the set power demand is less than a preset reference torque, to disconnect the output shaft of the first internal combustion engine from the output shaft of the second internal combustion engine, while controlling the first connection disconnection structure, when the rotation speed of the driveshaft is not lower than the preset reference speed and the torque demand at the set power demand is not less than the preset reference torque, to connect the output shaft of the first internal combustion engine with the output shaft of the second internal combustion engine.

10. A power output apparatus that outputs power to a driveshaft, said power output apparatus comprising:
a first internal combustion engine that is driven with high efficiency at a preset drive point and outputs power;
a first motor that uses the output power of the first internal combustion engine driven at the preset drive point to generate electric power with high efficiency;
a second internal combustion engine that outputs power to the driveshaft;
a second motor that inputs and outputs power from and to the driveshaft; and
an accumulator unit that is capable of transmitting electric power to and from the first motor and the second motor.

11. A power output apparatus in accordance with claim 10 , wherein the second internal combustion engine is drivable with high efficiency in a preset rotation range, and
the second motor outputs a torque close to a maximum possible torque, which is expected as a torque to be output to the driveshaft in a rotation stop state of the driveshaft.

12. A power output apparatus in accordance with claim 10, said power output apparatus further comprising:
a charge state detection unit that detects a state of charge of the accumulator unit;
a power demand setting module that sets a power demand to be output to the driveshaft, in response to an operator's operation; and
a control module that controls the first internal combustion engine, the first motor, the second internal combustion engine, and the second motor to keep the state of charge of the accumulator unit detected by the charge state detection unit in a predetermined charge range and to ensure output of a power, which is equivalent to the power demand set by said power demand setting module, to the driveshaft.

13. A power output apparatus that outputs power to a driveshaft, said power output apparatus comprising:
a first internal combustion engine that outputs power;
a first motor that uses the output power of the first internal combustion engine to generate electric power;
a second internal combustion engine that outputs power to the driveshaft;
a second motor that outputs to the driveshaft a torque close to a maximum possible torque, which is expected as a torque to be output to the driveshaft in a rotation stop state of the driveshaft; and
an accumulator unit that is capable of transmitting electric power to and from the first motor and the second motor.

14. A power output apparatus in accordance with claim 13, wherein the second internal combustion engine is drivable with high efficiency in a specific rotation speed range from an idling rotation speed or a preset first rotation speed higher than the idling rotation speed to a maximum possible rotation speed expected to the driveshaft.

15. A power output apparatus in accordance with claim 13, said power output apparatus further comprising:
a charge state detection unit that detects a state of charge of the accumulator unit;
a power demand setting module that sets a power demand to be output to the driveshaft, in response to an operator's operation; and
a control module that controls the first internal combustion engine, the first motor, the second internal combustion engine, and the second motor to keep the state of charge of the accumulator unit detected by the charge state detection unit in a predetermined charge range and to ensure output of a power, which is equivalent to the power demand set by said power demand setting module, to the driveshaft.

16. A motor vehicle comprising:
a first internal combustion engine that outputs power;
a first motor that uses the output power of the first internal combustion engine to generate electric power;
a second internal combustion engine that outputs power to a driveshaft linked with an axle of said motor vehicle;
a second motor that inputs and outputs power from and to the driveshaft;
an accumulator unit that is capable of transmitting electric power to and from the first motor and the second motor;
a first connection disconnection structure that connects and disconnects an output shaft of the first internal combustion engine with and from an output shaft of the second internal combustion engine; and
a second connection disconnection structure that connects and disconnects the output shaft of the second internal combustion engine with and from the driveshaft.

17. A motor vehicle in accordance with claim 16, said motor vehicle further comprising:
a charge state detection unit that detects a state of charge of the accumulator unit;
a power demand setting module that sets a power demand to be output to the driveshaft, in response to an operator's operation; and
a control module that controls the first internal combustion engine, the first motor, the second internal combustion engine, the second motor, and the first connection disconnection structure to keep the state of charge of the accumulator unit detected by the charge state detection unit in a predetermined charge range and to ensure output of a power, which is equivalent to the power demand set by said power demand setting module, to the driveshaft.

18. A motor vehicle in accordance with claim 17, wherein said control module controls the second connection disconnection structure, when a rotation speed of the driveshaft is lower than a preset reference speed, to disconnect the output shaft of the second internal combustion engine from the driveshaft, while controlling the second connection disconnection structure, when the rotation speed of the driveshaft is not lower than the preset reference speed, to connect the output shaft of the second internal combustion engine with the driveshaft.

19. A motor vehicle in accordance with claim 18, wherein said control module controls the first connection disconnection structure, when the rotation speed of the driveshaft is not lower than the preset reference speed and a torque demand at the set power demand is less than a preset reference torque, to disconnect the output shaft of the first internal combustion engine from the output shaft of the second internal combustion engine, while controlling the first connection disconnection structure, when the rotation speed of the driveshaft is not lower than the preset reference speed and the torque demand at the set power demand is not less than the preset reference torque, to connect the output shaft of the first internal combustion engine with the output shaft of the second internal combustion engine.

20. A motor vehicle comprising:
a first internal combustion engine that is driven with high efficiency at a preset drive point and outputs power;
a first motor that uses the output power of the first internal combustion engine driven at the preset drive point to generate electric power with high efficiency;
a second internal combustion engine that outputs power to a driveshaft linked with an axle of said motor vehicle;
a second motor that inputs and outputs power from and to the driveshaft;
an accumulator unit that is capable of transmitting electric power to and from the first motor and the second motor;
a charge state detection unit that detects a state of charge of the accumulator unit;
a power demand setting module that sets a power demand to be output to the driveshaft, in response to an operator's operation; and
a control module that controls the first internal combustion engine, the first motor, the second internal combustion engine, and the second motor to keep the state of charge of the accumulator unit detected by the charge state detection unit in a predetermined charge range and to ensure output of a power, which is equivalent to the power demand set by said power demand setting module, to the driveshaft.

21. A motor vehicle comprising:
a first internal combustion engine that outputs power;
a first motor that uses the output power of the first internal combustion engine to generate electric power;
a second internal combustion engine that outputs power to a driveshaft linked with an axle of said motor vehicle;
a second motor that outputs to the driveshaft a torque close to a maximum possible torque, which is expected as a torque to be output to the driveshaft in a rotation stop state of the driveshaft;
an accumulator unit that is capable of transmitting electric power to and from the first motor and the second motor;
a charge state detection unit that detects a state of charge of the accumulator unit;
a power demand setting module that sets a power demand to be output to the driveshaft, in response to an operator's operation; and
a control module that controls the first internal combustion engine, the first motor, the second internal combustion engine, and the second motor to keep the state of charge of the accumulator unit detected by the charge state detection unit in a predetermined charge range and to ensure output of a power, which is equivalent to the power demand set by said power demand setting module, to the driveshaft.
